Europäisches Patentamt

(19) **European Patent Office**

Office européen des brevets

(11) Veröffentlichungsnummer: **0 071 092**
**B1**

(12) **EUROPÄISCHE PATENTSCHRIFT**

(45) Veröffentlichungstag der Patentschrift:
**27.03.85**

(51) Int. Cl.⁴: **G 01 N 30/82,** G 01 N 31/00,
G 01 N 35/02

(21) Anmeldenummer: **82106320.3**

(22) Anmeldetag: **14.07.82**

(54) Probengeber zum Aufgeben von Proben bei der Gaschromatographie.

(30) Priorität: **31.07.81 DE 3130245**

(43) Veröffentlichungstag der Anmeldung:
**09.02.83 Patentblatt 83/6**

(45) Bekanntmachung des Hinweises auf die Patenterteilung:
**27.03.85 Patentblatt 85/13**

(84) Benannte Vertragsstaaten:
**DE FR GB IT**

(56) Entgegenhaltungen:
**DE - A - 1 773 141**
**DE - A - 2 818 251**
**DE - C - 1 297 904**

(73) Patentinhaber: **Bodenseewerk Perkin-Elmer & Co.**
**GmbH, Alte Nussdorfer Strasse 15 Postfach 1120,**
**D-7770 Überlingen/Bodensee (DE)**

(72) Erfinder: **Pospisil, Peter, Dipl.-Ing., Magnolienweg 9,**
**D-7770 Überlingen (DE)**
Erfinder: **Chlosta, Wolfgang, Jodokstrasse 16,**
**D-7770 Überlingen (DE)**

(74) Vertreter: **Weisse, Jürgen, Dipl.-Phys. et al,**
**Patentanwälte Dipl.-Phys. Jürgen Weisse Dipl.-Chem.**
**Dr. Rudolf Wolgast Bökenbusch 41 Postfach 11 03 86,**
**D-5620 Velbert 11 Langenberg (DE)**

**Beschreibung**

Die Erfindung betrifft einen Probengeber zum Aufgeben Proben bei der Gaschromatographie, bei welchem eine Mehrzahl von Proben nach der Dampfraummethode nacheinander auf den Einlaßteil eines Gaschromatographen geleitet werden, enthaltend

(a) einen ersten, beheizbaren, schrittweise fortschaltbaren Probengefäßspeicher mit einer Mehrzahl von Probenplätzen,

(b) Mittel zum Einstechen einer mit dem Einlaßteil des Gaschromatographen verbundenen Stechkanüle durch die Probengefäße abschließende Verschlußglieder hindurch in die oberhalb der Proben in den Probengefäßen gebildeten Dampfräume an einer Probengabestation und

(c) Mittel zum Überführen eines Volumens von Probe aus dem Dampfraum über die Stechkanüle in den Einlaßteil.

In einem geschlossenen Probengefäß stellt sich im Dampfraum oberhalb einer flüssigen Probe ein Gleichgewichtszustand ein, bei welchem die Partialdrücke der einzelnen Probenbestandteile proportional den Konzentrationen der Probenbestandteile in der flüssigen Probe sind. Bei einem nach der Dampfraummethode arbeitenden Probengeber wird ein abgemessenes Volumen aus dem Dampfraum des Probengefäßes auf den Einlaßteil eines Gaschromatographen gegeben. Aus der Zusammensetzung dieser Dampfraumprobe kann auf die Zusammensetzung der flüssigen Probe im Probengefäß geschlossen werden.

Bei einem bekannten Probengeber (DE-PS 1 284 660) sind Probengefäße mit einer selbstdichtenden Membran abgeschlossen. Durch diese selbstdichtende Membran wird eine Stechkanüle hindurchgestochen, die mit dem Eingang der Trennsäule eines Gaschromatographen in Verbindung steht. Der Eingang der Trennsäule ist wiederum mit einer Trägergasleitung verbunden, die durch ein Magnetventil absperrbar ist. Bei geöffnetem Magnetventil wird der am Eingang der Trennsäule herrschende Trägergasdruck über die als Kapillare wirkende Steckkanüle auf den Dampfraum des Probengefäßes übertragen, so daß sich in diesem ein erhöhter Druck aufbaut. An den Partialdrücken der Probenbestandteile ändert sich dabei nichts. Nach Absperren der Trägergasleitung durch das Magnetventil bricht der Druck am Eingang der Trennsäule zusammen. Es fließt jetzt Trägergas plus Probendampf aus dem Dampfraum zum Einlaßteil des Gaschromatographen am Eingang der Trennsäule. Das so dosierte Volumen wird bestimmt durch die Zeitspanne, während welcher das Magnetventil in der Trägergasleitung abgesperrt ist.

Um reproduzierbare Ergebnisse und ausreichende Dampfdrücke zu erhalten, werden die Probengefäße üblicherweise auf erhöhter Temperatur thermostatisiert. Hierfür sind verschiedene Lösungen bekannt.

Die DE-PS 1 297 904 zeigt einen Probengeber der vorerwähnten Art, bei dem ein Drehtisch mit einem thermostatisierten Flüssigkeitsbad zur Aufnahme einer Mehrzahl von Probengefäßen vorgesehen ist, der schrittweise fortschaltbar ist. Auf diese Weise wird nacheinander jedes der Probengefäße unter die feststehende Stechkanüle gebracht. Der Drehtisch ist zusammen mit dem Flüssigkeitsbad vertikal beweglich geführt und anhebbar, um jeweils ein Probengefäß auf die Stechkanüle aufzuschieben, so daß die Stechkanüle durch die selbstdichtende Membran des Probengefäßes hindurchsticht.

Bei einer anderen bekannten Konstruktion (DE-OS 2 818 251) besteht der Drehtisch aus einer feststehenden Achse und einer Grundplatte. Als Thermostatisierungsmittel dient ein durch eine elektrische Heizung beheizbarer Metallblock, der um die nicht drehbare Achse drehbar gelagert ist. Der Metallblock weist mit der Achse als Mitte einen Kranz von axialen Durchgangsbohrungen auf. Die Grundplatte, welche die axialen Durchgangsbohrungen unten schließt, besitzt einen Durchbruch zum Einschieben eines Probengefäßes in die jeweils mit dem Durchbruch fluchtende axiale Durchgangsbohrung. Vor dem Durchbruch ist eine federnd wegschiebbare Abdeckung vorgesehen.

Bei den bekannten Probengebern werden die Probengefäße von Hand in den Drehtisch bzw. in die Durchgangsbohrungen des drehbaren Metallblocks eingesetzt. Daraus ergeben sich folgende Probleme:

Es ist möglich, gleichzeitig eine Mehrzahl von Probengefäßen in den Drehtisch bzw. Metallblock einzusetzen. Durch eine automatische Steuerung, durch welche der Drehtisch schrittweise fortschaltbar und gegen die Stechkanüle anhebbar ist, könnten diese Proben dann automatisch abgearbeitet werden. Die Anzahl der Proben, die auf diese Weise automatisch aufgegeben werden können, ist auf die Anzahl der im Drehtisch bzw. im Metallblock verfügbaren Probenplätze beschränkt. Außerdem sind die Thermostatisierzeiten für die verschiedenen Proben bei dieser Betriebsweise unterschiedlich. Das kann zu Fehlmessungen bei solche Proben führen, bei denen sich das thermische Gleichgewicht nur sehr langsam einstellt, so daß zum Zeitpunkt der Probenüberführung noch kein stationärer Zustand erreicht ist. In diesem Falle ergeben sich bei unterschiedlichen Thermostatisierzeiten für die verschiedenen Proben keine vergleichbaren Bedingungen. Es kann auch vorkommen, daß sich Proben durch die Beheizung chemisch verändern, sei es daß sie sich thermisch zersetzen oder daß ihre Bestandteile miteinander reagieren. Auch in diesem Falle ergeben sich keine vergleichbaren Bedingungen, wenn die Thermostatisierzeiten für die verschiedenen Proben unterschiedlich sind.

Will man dies bei den bekannten Probengebern vermeiden, so müssen die Proben laufend in dem Maße aufgegeben werden, wie die gaschromatographische Analyse durchgeführt und der Drehtisch weitergeschaltet wird.

Der Erfindung liegt die Aufgabe zugrunde, einen Probengeber der eingangs definierten Art so auszubilden, daß er das automatische Aufgeben einer großen Anzahl von Proben unter vergleichbaren thermischen Bedingungen gestattet.

Erfindungsgemäß wird diese Aufgabe gelöst durch

(d) einen zweiten, schrittweise fortschaltbaren Probengefäßspeicher,

(e) Mittel zum Überführen jeweils eines Probengefäßes aus dem zweiten Probengefäßspeicher an einen Probenplatz des ersten Probengefäßspeichers an einer Überführungsstation und

(f) Mittel zum synchronisierten Steuern des ersten Probengefäßspeichers, der Einstech- und Probenüberführungsmittel, des zweiten Probengefäßspeichers und der Probengefäßüberführungsmittel.

Es kann auf diese Weise eine größere Anzahl von Proben in den zweiten, schrittweise fortschaltbaren Probengefäßspeicher eingesetzt werden. Diese Proben werden noch nicht beheizt. Sie werden dann automatisch in den ersten beheizbaren Probengefäßspeicher überführt und können dort mit konstanter Thermostatisierzeit bis zum Überführen der Probe zum Einlaßteil des Gaschromatographen beheizt werden.

Ausgestaltungen der Erfindung sind Gegenstand der abhängigen Ansprüche.

Ein Ausführungsbeispiel der Erfindung ist nachstehend unter Bezugnahme auf die zugehörigen Zeichnungen näher erläutert.

Fig. 1 ist ein schematischer Vertikalschnitt des Probengebers.

Fig. 2 ist eine Draufsicht des Probengebers.

Fig. 3 ist ein abgebrochener Vertikalschnitt und zeigt den oberen Teil des beheizten ersten Probengefäßspeichers mit der Stechkanüle.

Fig. 4 ist ein abgebrochener Vertikalschnitt und zeigt den Motor und Mechanismus zum Anheben des ersten Probengefäßspeichers gegen die Stechkanüle.

Fig. 5 veranschaulicht schematisch die Numerierung der Proben und die durch erste Fördermittel bewirkte Fortschaltung jeweils eines Probenhalters mit dessen verschiedenen Probengefäßen zu der Überführungsstation.

Fig. 6 veranschaulicht schematisch die ersten Fördermittel.

Fig. 7 veranschaulicht die durch zweite Fördermittel bewirkte Fortschaltung der in zwei Kolonnen angeordneten Probenhalter in Längsrichtung der Kolonnen.

Fig. 8 veranschaulicht den Ablauf der schrittweisen Bewegung der Probenhalter zu der Überführungsstation.

Fig. 9 zeigt schematisch die Probengefäßüberführungsmittel zum Überführen eines Probengefäßes aus dem Probenhalter in den ersten Probengefäßspeicher.

Fig. 10 zeigt schematisch die schrittweise Bewegung der Probengefäße in dem ersten Probengefäßspeicher.

Fig. 11 zeigt schematisch die Bewegung des ersten Probenspeichers gegen die Stechkanüle.

Fig. 12 zeigt schematisch die Erzeugung der Positionssignale für die Bewegung der ersten Fördermittel und der Signale für die Probenidentifizierung.

Fig. 13 zeigt die pneumatische Schaltung der Probenüberführungsmittel.

Fig. 14 veranschaulicht die Erzeugung von Taktimpulsen für die Ansteuerung der Stellmotore.

Fig. 15 ist ein Schaltbild und zeigt die Steuerung eines der Stellmotore.

Fig. 16 zeigt die Steuerung eines der Magnetventile bei den Probenüberführungsmitteln.

Fig. 17 veranschaulicht den Zeitablauf bei der Probenüberführung.

Fig. 18 ist ein Blockschaltbild der Mittel zum synchronisierten Steuern der einzelnen Teile des Probengebers und der zugehörigen Stellmotore und Magnetventile.

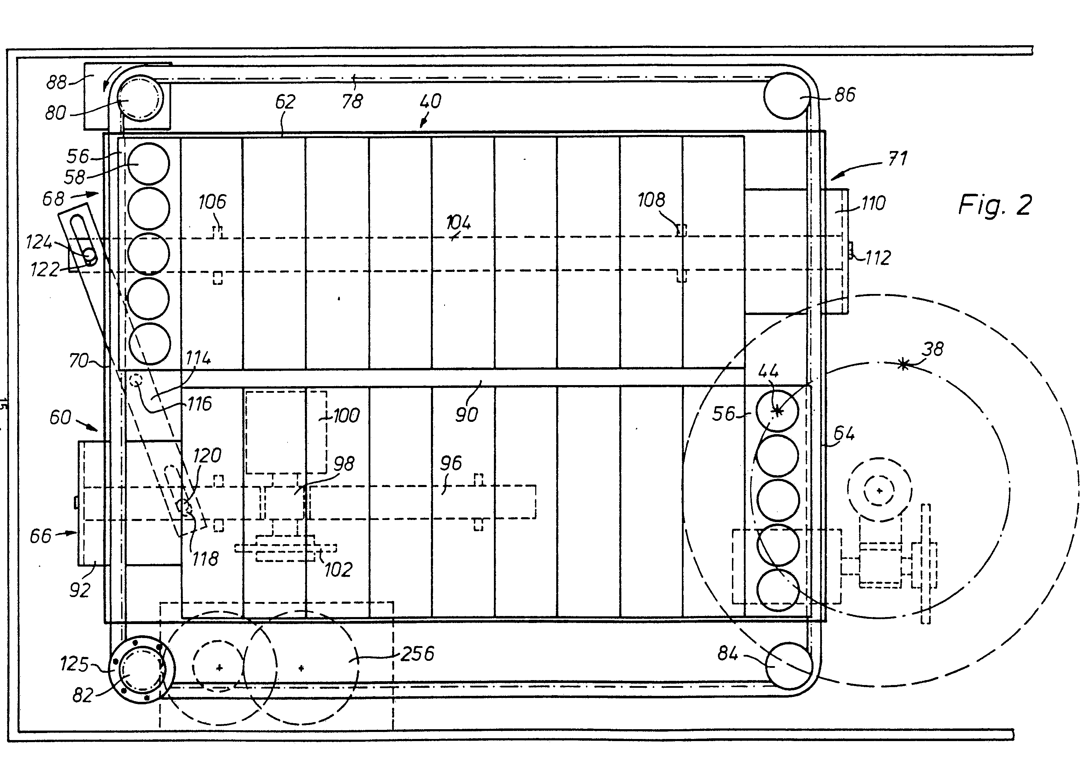

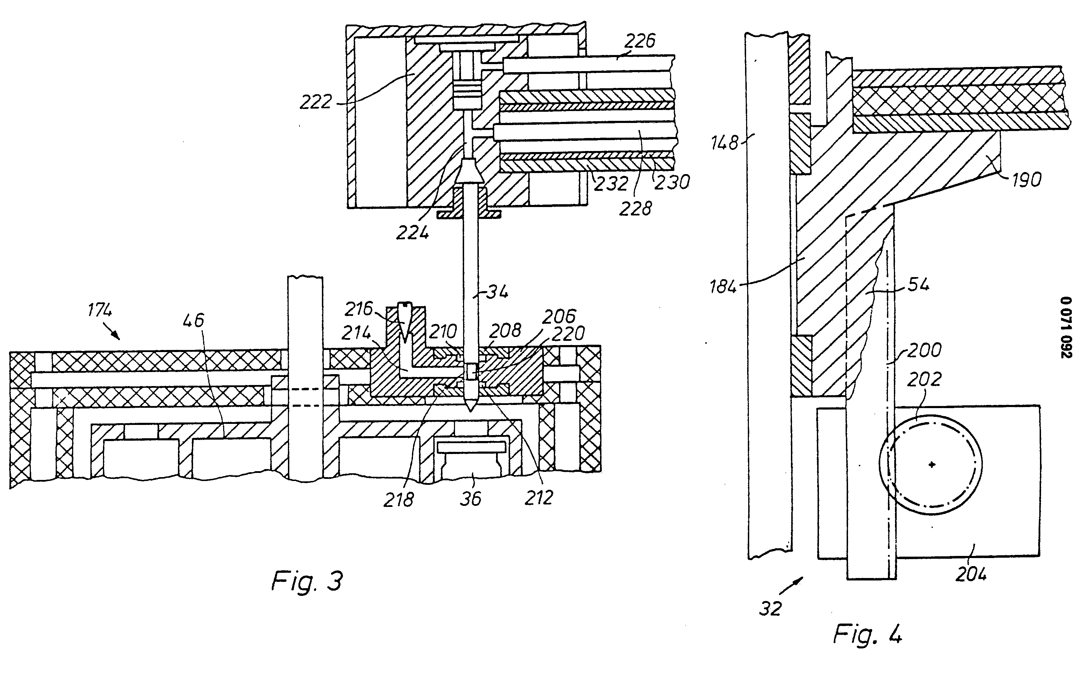

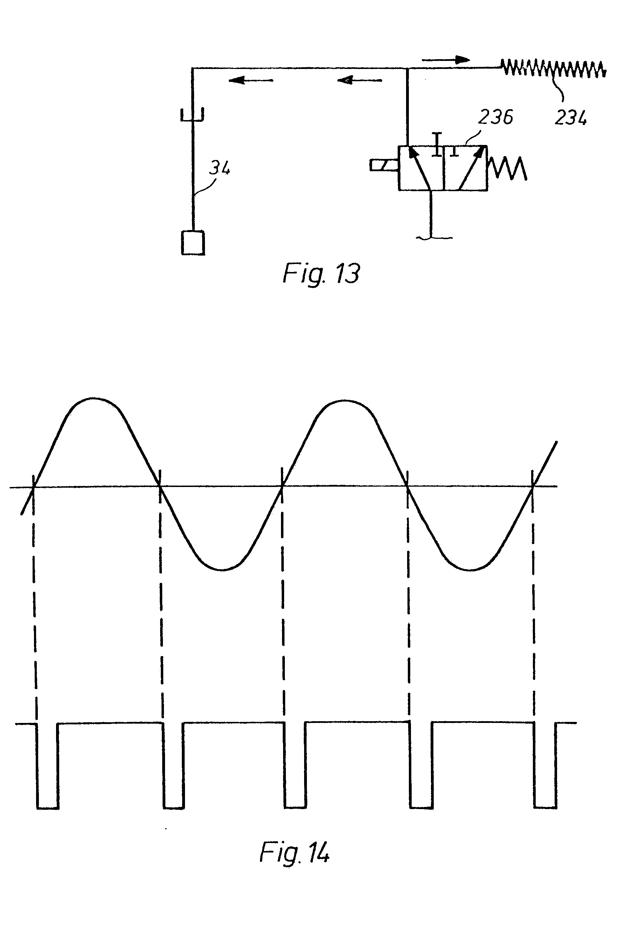

Der Probengeber enthält einen ersten, beheizbaren schrittweise fortschreitbaren Probengefäßspeicher 30 mit einer Mehrzahl von Probenplätzen, Mittel 32 zum Einstechen einer mit dem Einlaßteil des Gaschromatographen verbundenen Stechkanüle 34 (Fig. 3) durch die Probengefäße 36 abschließende Verschlußglieder hindurch in die oberhalb der Proben in den Probengefäßen 36 gebildeten Dampfräume an einer Probenstation 38. Es sind weiterhin Mittel zum Überführen eines Volumens von Probe aus dem Dampfraum über die Stechkanüle 34 in den Einlaßteil des Gaschromatographen vorgesehen, die in Fig. 13 näher dargestellt sind. Der Probengeber enthält einen zweiten fortschaltbaren Probengefäßspeicher 40, Mittel 42 zum Überführen jeweils eines Probengefäßes 36 aus dem zweiten Probengefäßspeicher 40 an einen Probenplatz des ersten Probengefäßspeichers 30 an einer Überführungsstation 44 (Fig. 2) und Mittel zum synchronisierten Steuern des ersten Probengefäßspeichers 30, der Einstech- und Probenüberführungsmittel 32 bzw. Fig. 13 des zweiten Probengefäßspeichers 40 und der Probengefäßüberführungsmittel 42. Der erste, beheizbare Probenspeicher enthält einen drehbar gelagerten, beheizbaren Ofenblock 46, der um die Achse herum einen Kranz von axialen Durchgangsbohrungen 48 aufweist, und eine feststehende Grundplatte 50, die an der Überführungsstation 44 einen mit jeweils einer Durchgangsbohrung 42 fluchtenden Durchbruch aufweist. Die Probenüberführungsmittel 42 enthalten ein Hubglied 52, durch welches jeweils ein Probengefäß 36 durch den Durchbruch hindurch in die damit fluchtende Durchgangsbohrung 42 einschiebbar ist. Die Stechkanüle 34 ist gerätefest an der Probenstation 38 gehalten und die Einstechmittel 32 enthalten einen Hubmechanismus 54, durch den der erste Probengefäßspeicher 30 gegen die Stechkanüle 34 anhebbar ist.

Der zweite Probengefäßspeicher 40 enthält eine Mehrzahl von langgestreckten Probenhaltern 56 von blockförmiger Grundform, die jeder mit einer Reihe von Durchbrüchen 58 zur Aufnahme von Probengefäßen 36 versehen ist und die mit ihren Längsseiten aneinander angrenzend in einer Kolonne 60 auf einem Tisch 62 angeordnet sind. Auf der der Überführungsstation 44 benachbarten Seite der Kolonne 60 sind erste Fördermittel 64 vorgesehen, durch welche der jeweils an der Stirnseite der Kolonne 60 befindliche Probenhalter 56 schrittweise quer zu der Kolonne 60 so fortschaltbar ist, daß die in dem Probenhalter 56 gehalterten Probengefäße nacheinander an die Überführungsstation 44 gelangen und der Probenhalter 56 schließlich seitlich aus der Kolonne 60 herausgeschoben wird. Durch zweite Fördermittel 66 sind nach jedem seitlichen Herausschieben des stirnseitigen Probenhalters 56 die Probenhalter 56 in Längsrichtung der Kolonne 60 um eine Probenhalterbreite fortschaltbar, so daß der nächste Probenhalter 56 in den Bereich der ersten Fördermittel 64 gelangt. Der zweite Probengefäßspeicher 40 weist weiterhin eine zweite Kolonne 68 von Probenhaltern 56 parallel zu der ersten Kolonne 60 auf dem Tisch 62 auf. Der Probenhalter 56 auf der der Überführungsstation 44 abgewandten Stirnseite der zweiten Kolonne 68 (links in Fig. 2) ist durch dritte Fördermittel 70 quer zur Längsrichtung der zweiten Kolonne 68 vor die benachbarte Stirnseite der ersten Kolonne 60 verschiebbar, nachdem die Probenhalter 56 der ersten Kolonne 60 durch die zweiten Fördermittel 66 um eine Probenhalterbreite fortgeschaltet worden sind. Nach jedem seitlichen Herausschieben des stirnseitigen Probenhalters 56 aus der zweiten Kolonne 68 in die erste Kolonne 60 sind die Probenhalter 56 der zweiten Kolonne 68 durch vierte Fördermittel 71 gegensinnig zur Förderrichtung der zweiten Fördermittel 66 in Längsrichtung der zweiten Kolonne 68 um eine Probenhalterbreite fortschaltbar, so daß der nächste Probenhalter 56 in den Bereich der dritten Fördermittel 70 gerät.

Nach dem Überführen eines Probengefäßes 36 aus dem Probenhalter 56 in den ersten Probengefäßspeicher 30 und Fortschalten des ersten Probengefäßspeichers 30 überführen die Probengefäßüberführungsmittel 42 ein Probengefäß 36', das in dem ersten Probengefäßspeicher 30 an dem Probenplatz sitzt, der durch das Fortschalten an die Überführungsstation 44 gelangt, aus dem ersten Probengefäßspeicher 30 zu dem frei gewordenen Probenplatz des zweiten Probengefäßspeichers 40, d. h. in den frei gewordenen Durchbruch 58 des Probenhalters 56.

Die Mittel zum synchronisierten Steuern des Probengebers die weiter unten im einzelnen beschrieben werden, arbeiten so, daß sie alle Proben für die gleiche, definierte Zeit zwischen Probengefäßüberführung und Probenüberführung in dem ersten, beheizten Probengefäßspeicher 30 lassen. Für den Fall, daß die zum Aufheizen der Probe erforderliche Thermostatisierzeit T größer ist als die vom Gaschromatographen benötigte Analysenzeit A und die Analysenzeit A größer ist als die Taktzeit $T_W$ zwischen zwei aufeinanderfolgenden Schritten des ersten, schrittweisen fortschaltbaren Probengefäßspeichers (30), wird der Probengeber durch die Mittel zum synchronisierten Steuern des Probengebers in folgender Weise gesteuert: Es wird nur jeder i-te Probenplatz mit einem Probengefäß 36 besetzt. Dabei ist

$$i = 1 + \text{INT}\left(\frac{n \cdot A}{T}\right)$$

Hierin ist n die Anzahl der zwischen Überführungsstation 44 und Probenstation 38 liegende Schritte. INT bedeutet den ganzzahligen Anteil des Klammerausdrucks.

Die zwischen aufeinanderfolgenden Probenüberführungen liegende Analysenzeit wird zu

$$A_{KORR} = \left(1 + \text{INT}\,\frac{n \cdot A}{T}\right) \cdot \frac{T}{n}$$

vorgegeben.

Wenn die zum Aufheizen der Probe erforderliche Thermostatisierzeit T größer ist als die vom Gaschromatographen benötigte Analysenzeit und die Analysenzeit wiederum kleiner als die Taktzeit $T_W$ ist, dann wird durch die Mittel zum synchronisierten Steuern des Probengebers jeder Probenplatz der ersten, schrittweise fortschaltbaren Probengefäßspeichers 30 mit einem Probengefäß 36 besetzt.

Für den Fall, daß die zum Aufheizen der Probe erforderliche Thermostatisierzeit T kleiner ist als die vom Gaschromatographen benötigte Analysenzeit A, arbeiten die Mittel zum synchronisierten Steuern des Probengebers wie folgt:

Es wird jeweils nur eine Probe in den ersten Probengefäßspeicher 30 überführt. Das überführte Probengefäß 36 wird aus der Überführungsposition 44 um wenigstens einen Schritt fortgeschaltet. Nach Ablauf der Thermostatisierzeit wird das Probengefäß 36 zu der Probenstation 38 weitergeschaltet. Es wird die Probenüberführung eingeleitet. Nach Ablauf einer der Differenz A−T von Analysenzeit und Thermostatisierzeit entsprechenden Zeitspanne wird die Überführung eines neuen Probengefäßes aus dem zweiten Probengefäßspeicher 40 in den ersten Probengefäßspeicher 30 und das Austragen des bisher behandelten Probengefäßes bewirkt. Die verschiedenen Baugruppen des Probengebers werden nachstehend im einzelnen beschrieben.

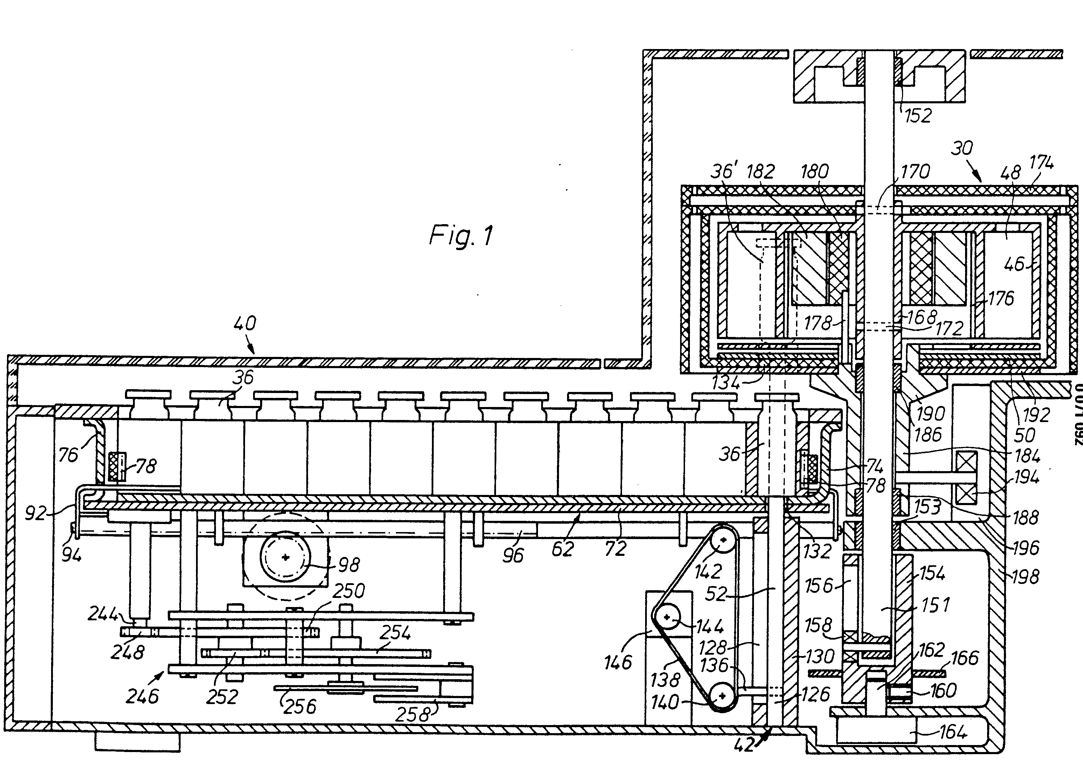

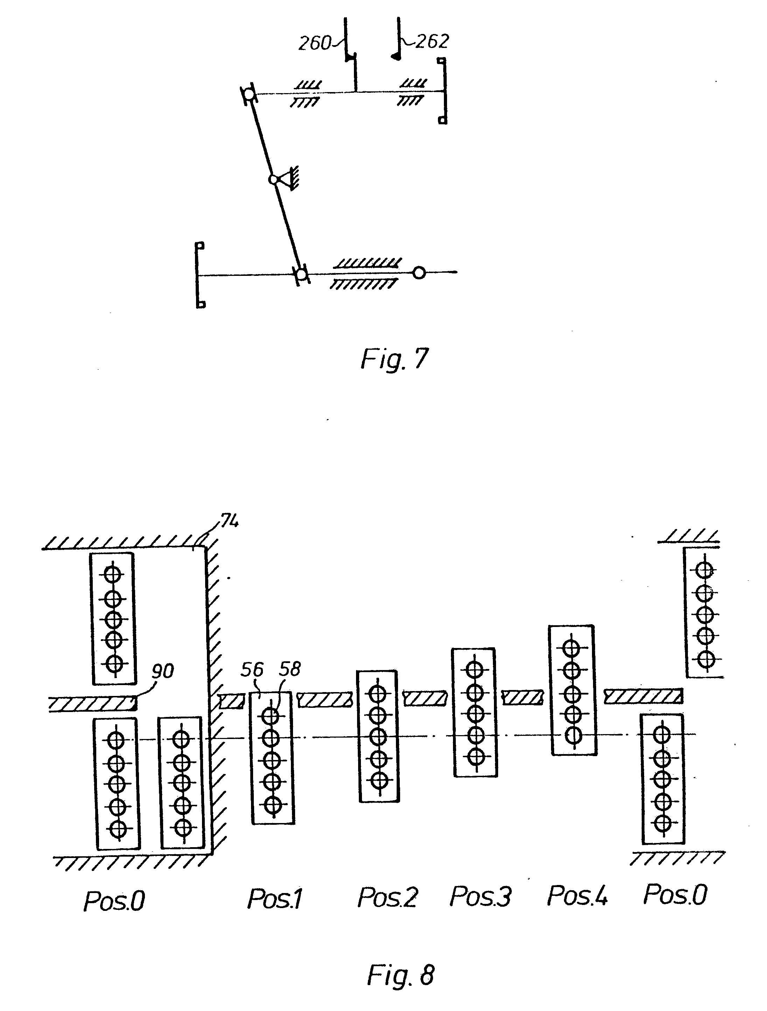

Der Tisch 62 des zweiten Probengefäßspeichers 40 enthält eine Platte 72. Auf der Platte 72 sitzt ein wannartiger Blechteil 74, der auf der in Fig. 1 linken Seite offen ist. Dort ist die von dem Blechteil 74 gebildete »Wanne« durch einen Blechteil 76 abgeschlossen. Wie aus Fig. 2 ersichtlich ist, sitzen auf dem Tisch 62 zwei Kolonnen 60 und 68 von Probenhaltern 56 mit je fünf Durchbrüchen 58. Die ersten und dritten Fördermittel 64 bzw. 70 enthalten gegenüberliegende Abschnitte eines endlosen Zahnriemens 78, der längs eines Rechtecks um ein Antriebs-Zahnriemenrad 80 und Zahnriemenräder 82, 84 und 86 geführt ist. Das Antriebs-Zahnriemenrad 80 sitzt auf der Welle eines Stellmotors 88. Durch den Stellmotor 88 ist das Antriebs-Zahnriemenrad 80 im Sinne des Pfeils antreibbar, so daß eine Bewegung des Zahnriemens 78 entgegen dem Uhrzeigersinn erfolgt. Die Probenhalter 56 sind längs ihrer Längsseiten mit Verzahnungen versehen, in welche der Zahnriemen 78 eingreift, wenn ein Probenhalter 56 gegen den Zahnriemen gedrückt wird. Der Zahnriemen 78 ist, wie in Fig. 1 deutlich erkennbar ist, auf den in Fig. 1 und 2 rechten und linken Seiten auf der Innenseite der Wanne 74 bzw. des Blechteils 76 geführt, während er auf den in Fig. 2 oberen und unteren Seiten aus der Wanne herausgeführt ist und außerhalb derselben verläuft. Innerhalb der Wanne, die durch eine Trennwand 90 in zwei Teilkammern unterteilt ist, sind die Probenhalter 56, wie gesagt in zwei Kolonnen 60 und 68, zwischen den Rändern des wannenförmigen Blechteils 74 und der Trennwand 90 verschiebbar geführt. Die zweiten Fördermittel 66 enthalten einen L-förmigen Blechwinkel 92, der mit seinem waagerechten Schenkel vor der Stirnfläche der ersten Kolonne 60 von Probenhaltern 56 unter dem Zahnriemen 78 her durch einen Durchbruch des Blechteils 76 hindurch in die Wanne hineinragt. Der Blechwinkel 92 ist mit seinem senkrechten Schenkel mittels einer Schraube 94 an einer Zahnstange 96 befestigt. Die Zahnstange 96 ist auf der Unterseite des Tischs 62 geradgeführt und ist mit einem Ritzel 98 in Eingriff, das von einem Stellmotor 100 angetrieben wird. Auf der Welle des Stellmotors 100 und des Ritzels 98 sitzt eine Signalscheibe 102, durch welche ein Signal erzeugbar ist, wenn das Ritzel 98 und damit die Zahnstange 96 ihre Endstellungen erreicht haben. Die dritten Fördermittel 71 enthalten einen Schieber 104, der durch Führungen 106 und 108 an der Unterseite des Tischs 62 geführt ist. Mit dem Schieber 104 ist ein L-förmiger Blechwinkel 110 mittels einer Schraube 112 verschraubt. Der Blechwinkel 112 greift mit seinem waagerechten Schenkel vor der in den Figuren rechten Stirnfläche der Kolonne 68 und unterhalb des Zahnriemens 78 durch einen Druchbruch des Blechteils 74. Bei einer Bewegung des Schiebers 104 nach links in Fig. 2 kann die Kolonne 68 nach links verschoben werden, bis sich der die linke Stirnseite der Kolonne 68 bildende Probenhalter 56 an den Zahnriemen 78 anlegt. Die Zahnstange 96 und der Schieber 104 sind über einen Lenker 114 miteinander gekoppelt. Der Lenker 114 ist um eine Schwenkachse 116 verschwenkbar und an einem Ende mittels eines Langlochs 118 und eines Stifts 120 an der Zahnstange 96 angelegt, während er am anderen Ende mittels eines Langlochs 122 und eines Stifts 124 an dem Schieber 104 angelenkt ist. Bei einer Bewegung der Zahnstange 96 nach rechts in Fig. 2 wird der Schieber 104 in gleicher Weise nach links in Fig. 2 bewegt. Durch diese Bewegung kann nach dem schrittweisen Verschieben des Probenträgers 56 an der rechten Stirnseite der Kolonne 60 aus dem Bereich der Kolonne 60 heraus der nächste Probenträger 56 nach rechts zum Eingriff in den Zahnriemen 78 bewegt werden. Gleichzeitig wird, nachdem der Probenträger 56 auf der linken Stirnseite der Kolonne 68 durch den Zahnriemen 78 nach unten in den Bereich der Kolonne 60 bewegt worden ist, die Kolonne 68 nach links bewegt und der nächste Probenträger wieder an den Zahnriemen 78 angelegt. Der in Fig. 2 jeweils rechte Abschnitt des Zahnriemens 78 bildet somit die »ersten Fördermittel«, durch die der stirnseitige Probenträger der Kolonne 60 schrittweise nach oben bewegt wird. Der in Fig. 2 linke Abschnitt des Zahnriemens 78 bildet die »dritten Fördermittel«, durch welche der linke, stirnseitige Probenträger 56 von der Kolonne 68 schrittweise nach unten in die Kolonne 60 verschoben wird. Bei dieser Bewegung wird, wie in Fig. 8 dargestellt ist, nacheinander jeder Durchbruch 58 des rechten, stirnseitigen Probenträgers 56 der Kolonne 60 zu der Überführungsstation 44 bewegt.

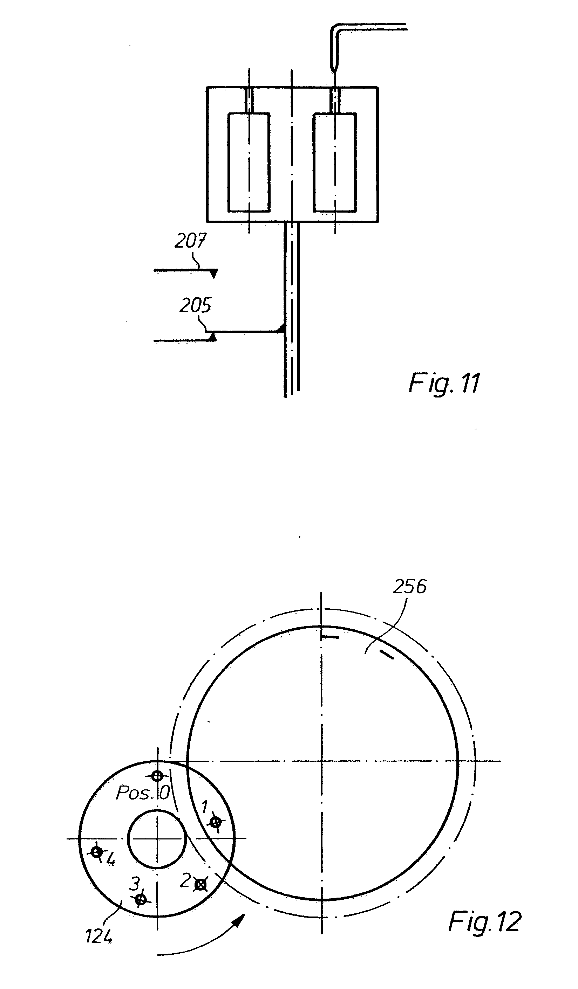

Mit dem Zahnriemenrad 82 ist eine Signalscheibe 125 verbunden. Die Signalscheibe 125 hat, wie aus Fig. 12 am besten ersichtlich ist, fünf Löcher, die mit »0«, »1«, »2«, »3« und »4« bezeichnet sind. Die Löcher werden durch eine (nicht dargestellte) photoelektrische Lichtschranke abgetastet. Bei einer bevorzugten Ausführungsform beträgt der Abstand der Probengefäße in dem Probenhalter jeweils 26 mm. Die Abstände der Löcher »0« bis »4« ist so gewählt, daß bei einer Drehbewegung der Signalscheibe 125 und damit des Zahnriemenrads 82 von einem Loch zum nächsten jeweils eine Bewegung des Zahnriemens 78 und damit eine Verschiebung des rechten Probenhalters der Kolonne 60 und des linken Probenhalters der Kolonne 68 um 26 mm erfolgt. Der Abstand zwischen dem Loch »4« und dem Loch »0« ist so gewählt, daß bei einer vollen Umdrehung des Zahnriemenrads 82 die beiden Probenhalter jeweils um 140 mm bewegt und damit in die jeweils andere Kolonne 68 bzw. 60 verschoben werden. Bei der bevorzugten Ausführungsform hat der Zahnriemen 78 eine Teilung von 10 mm. Das Zahnriemenrad 82 hat 14 Zähne, so daß eine Umdrehung einer Transportlänge von 140 mm entspricht.

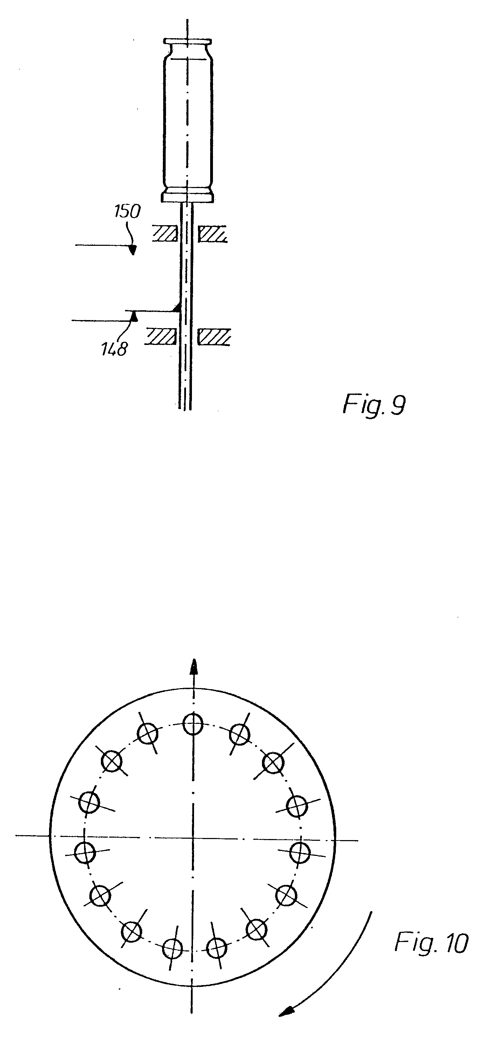

Die Probengefäßüberführungsmittel 42 enthalten als Hubglied 52 einen Stößel 126, der in einer mit einem Längsschlitz 128 ersehenen Hülse 130 gleitbeweglich geführt ist. Der Stößel 126 fluchtet mit einem Durchbruch 132 des Tischs 62, jeweils einem Durchbruch 58 eines Probenhalters 56 und dem Durchbruch 134 in der feststehenden Grundplatte des Probengefäßspeichers 30. Der Stößel 126 ist durch einen Stift 136 mit einer Kette 138 verbunden. Die Kette 138 ist über zwei Kettenräder 140 und 142 parallel zu dem Stößel 126 und der Hülse 130 geführt. Die Kette 138 ist weiterhin über ein Kettenrad 144 geführt, das von einem Stellmotor 146 antreibbar ist. Wie aus Fig. 9 ersichtlich ist, sind Endschalter 148 und 150 vorgesehen, die Signal geben, wenn der Stößel 126 seine untere bzw. seine obere Endstellung erreicht hat.

Der erste Probengefäßspeicher 30 sitzt mit dem drehbaren Ofenblock 46 auf einer Welle 151. Die Welle 151 ist in Lagern 152 und 153 drehbar und längsverschiebbar geführt. Das untere Ende der Welle 151 ist in einer Hülse 154 längsverschiebbar geführt. Die Hülse 154 weist einen Längsschlitz 156 auf, in welchem eine an der Welle 151 sitzende Kugellagerrolle 158 geführt ist. Auf diese Weise ist die Welle 151 gegenüber der Hülse 154 unverdrehbar gehalten, aber in Längsrichtung verschiebbar. Die Hülse 154 ist mittels einer Madenschraube 160 mit der Welle 162 eines Stellmotors 164 verbunden. Der Stellmotor 164 kann daher die Welle 151 und damit den Ofenblock 46 verdrehen. Gleichzeitig ist eine Axialbewegung, auf und ab in Fig. 1, des Ofenblocks 46 und der Welle 151 möglich. Die Bewegung des Ofenblocks 46 wird durch eine Signalscheibe 166 überwacht, die an der Hülse 154 sitzt und mit einer (nicht dargestellten) Lichtschranke zusammenwirkt.

Der Ofenblock 46 ist mit einer Nabe 168 mittels Querstiften 170, 172 an der Welle 151 befestigt. Er ist von einem Isoliermantel 174 umgeben. Zwischen Ofenblock 46 und Isoliermantel 174 sitzt die ebenfalls feststehende Grundplatte 50. Der Isoliermantel hat einen Durchbruch, der mit dem Durchbruch 134 in der Grundplatte 50 fluchtet. In dem Ofenblock sitzt innerhalb der Durchgangsbohrungen 48 eine Heizung 176, die über eine feststehende Zuleitung 178 und Schleifringe 180, 182 mit Strom versorgt wird. Der Isoliermantel 174 und die Grundplatte 50 sind mit einer Hülse 184 verbunden, die mit Lagern 186 und 188 auf der Welle 151 gelagert ist und mit einem Flansch 190 an der Unterseite einer den Isoliermantel 174 tragenden Platte 192 anliegt. Die Hülse 184 trägt eine seitliche Rolle 194, die von einem Kugellager gebildet ist und in einer Nut 196 eines Gehäuses 198 geführt wird. Dadurch ist die Hülse 184 gegen Verdrehung gesichert, kann aber in vertikaler Richtung bewegt werden.

Wie aus Fig. 4 ersichtlich ist, sitzt an dem Flansch 190 und an der Hülse 184 eine Zahnstange 200, die sich vertikal, parallel zur Welle 151 erstreckt. Die Zahnstange ist in Eingriff mit einem Ritzel 202, das von einem Stellmotor 204 antreibbar ist. Durch den Stellmotor 204 können somit die Hülse 184 und mit dieser der Isoliermantel 174, der Ofenblock 46 und die damit verbundene Welle 151 aus der dargestellten Lage aufwärts gegen die Stechkanüle 34 bewegt werden. Der Hub wird über Fühler 205 und 207, wie in Fig. 11 schematisch dargestellt, überwacht.

Fig. 3 zeigt die Stechkanüle 34 mit dem stillstehenden Isoliermantel 174 und dem Ofenblock 46 in einer abgebrochenen Darstellung. Der Isoliermantel 174 und der Ofenblock 46 befindet sich dabei in der auch in Fig. 1 dargestellten unteren Lage. In den Isoliermantel 174 ist ein Gehäuse 206 eingesetzt, das eine Gehäusebohrung 208 aufweist. In dieser Gehäusebohrung 208 ist die Stechkanüle abdichtend geführt. Die Abdichtung erfolgt durch zwei O-Ringe 210 und 212. Von der Gehäusebohrung 208 zweigt ein seitlicher Auslaßkanal 214 ab, der über eine Drossel in Form eines einstellbaren Nadelventils 216 mit der Atmosphäre in Verbindung steht. Die Stechkanüle 34 weist eine Umfangsnut 218 auf, in welcher die seitliche Austrittsöffnung 220 der Stechkanüle mündet. In der dargestellten Ruhestellung befindet sich die Umfangsnut 218 mit der Auslaßöffnung 220 zwischen den O-Ringen 210 und 212 und steht mit dem Auslaßkanal in Verbindung.

Die Stechkanülenanordnung entspricht der DE-A 3 109 616.

Beim Anheben des Isoliermantels 174 und Ofenblocks 46 wird das Gehäuse 206 mit der Gehäusebohrung 208 auf der Stechkanüle 34 nach oben verschoben. Die Stechkanüle 34 sticht durch eine das Probengefäß 36 abschließende selbstdichtende Membran hindurch, bis die seitliche Austrittsöffnung 220 der Stechkanüle 34 im Dampfraum des Probengefäßes 36 liegt.

Die Stechkanüle ist an einem Block 222 angebracht, der einen Kanal 224 aufweist. Der Kanal 224 steht mit der Stechkanüle 34 in Verbindung. In den Kanal 224 mündet eine Trägergasleitung 226. Von dem Kanal 224 geht eine Leitung 228 ab, die zum eigentlichen Einlaßteil des Gaschromatographen und zum Eingang der Trennsäule führt. Die Leitung 228 ist durch eine Heizung 230 beheizt und mit einem Isoliermantel 232 umgeben.

Fig. 13 zeigt die pneumatische Schaltung der Probenüberführungsmittel.

Die Stechkanüle 34 ist mit dem Eingang einer Trennsäule 234 verbunden. Am Eingang der Trennsäule 234 ist über ein Magnetventil 236 ein vorgegebener Trägergasdruck anlegbar.

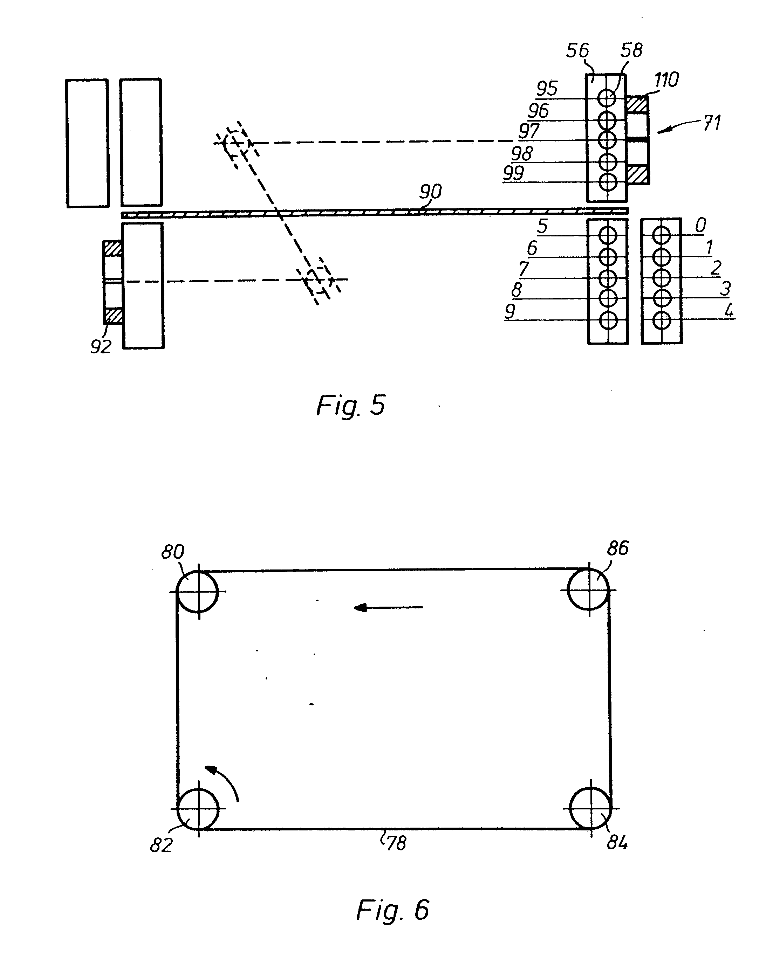

Mit dem Zahnriemenrad 82, dessen Welle mit 244 bezeichnet ist, ist über ein Getriebe 246 bestehend aus Zahnrädern 248, 250, 252 und 254 eine Codierscheibe 256 verbunden. Die Codierscheibe 256 wird mit dem Zahnriemenrad 82 im Verhältnis 1 : 20 untersetzt angetrieben. Sie wird durch eine Lichtschrankenanordnung 258 photoelektrisch abgetastet und enthält Codierungen für einhundert verschiedene Proben. Aus Fig. 5 ist ersichtlich, wie die einzelnen Durchbrüche 58 der Probenhalter von »0« bis »99« bezeichnet sind.

In dem Probengeber werden eine Reihe von Bewegungen ausgeführt, die durch einzelne Stellglieder gesteuert sind: Über den Zahnriemen 78 werden die Probenhalter 56 quer zur Längsrichtung der Kolonnen am rechten Ende der Kolonne 60 (Fig. 2) nach oben und am linken Ende der Kolonne 68 nach unten bewegt. Der Stellmotor für diese Bewegung ist Stellmotor 88. Diese Bewegung ist in Fig. 6 einzeln dargestellt.

Die von den Blechwinkeln 92 und 110 gebildeten Schieber zur Verschiebung der Probenhalter 56 in Längsrichtung der Kolonnen 60 bzw. 58 führen jeweils einen Rückhub aus, der die Querbewegung der Probenhalter 56 vom rechten Ende der Kolonne 60 nach oben in die Kolonne 68 und vom linken Ende der Kolonne 68 nach unten in die Kolonne 60 zuläßt, und dann jeweils einen Vorwärtshub, wobei sich der Blechwinkel 92 nach rechts in Fig. 2 und der Blechwinkel 110 nach links bewegt. Diese beiden Bewegungen, die durch die Signalscheibe 102 überwacht werden, werden von dem Stellmotor 100 eingeleitet. In Fig. 7 sind diese Bewegungen einzeln dargestellt, wobei die Funktion der Signalscheibe 102 durch Endschalter 260, 262 symbolisiert ist.

Weitere Bewegungen sind die Aufwärts- und Abwärtsbewegung des Stößels 126, durch die ein Probengefäß 36 in den Ofenblock 46 eingeschoben und nach Weiterdrehen des Ofenblocks gegebenenfalls ein anderes Probengefäß aus dem Ofenblock heruntergelassen wird. Diese Bewegungen, die von den Endschaltern 148 und 150 überwacht werden, wird von dem Stellmotor 164 gesteuert. Das ist in Fig. 9 gesondert dargestellt. Die in Fig. 10 dargestellte Bewegung, nämlich die Drehung des Ofenblocks 46 wird durch den Stellmotor 164 gesteuert und durch ein Signal von der Signalscheibe 166 überwacht. Schließlich ist in Fig. 11 die Bewegung des ersten Probengefäßspeichers 30 gegen die Stechkanüle 34 schematisch dargestellt, die von dem Stellmotor 204 eingeleitet und durch die Fühler 205 und 207 (Fig. 11) überwacht wird. Schließlich ist als Stellglied noch das Magnetventil 236 vorgesehen, das einen Teil der »Probenüberführungsmittel« bildet.

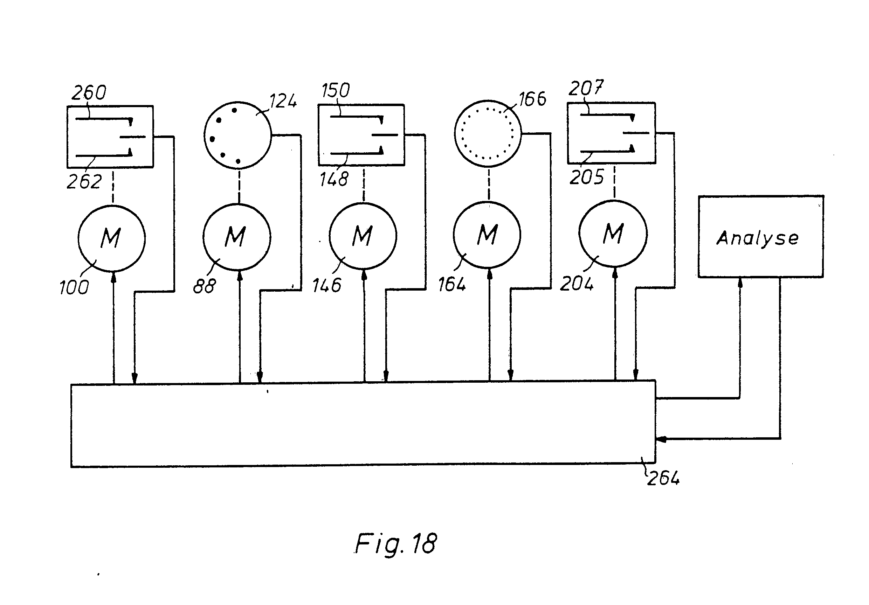

Die »Mittel zum synchronisierten Steuern« der einzelnen Teile des Probengebers ist ein Mikrocomputer vorgesehen, der die Stellmotore und Magnetventile ansteuert und andererseits Rückmeldesignale von den verschiedenen vorerwähnten Fühlern erhält. Das ist in dem Blockschaltbild von Fig. 18 schematisch dargestellt.

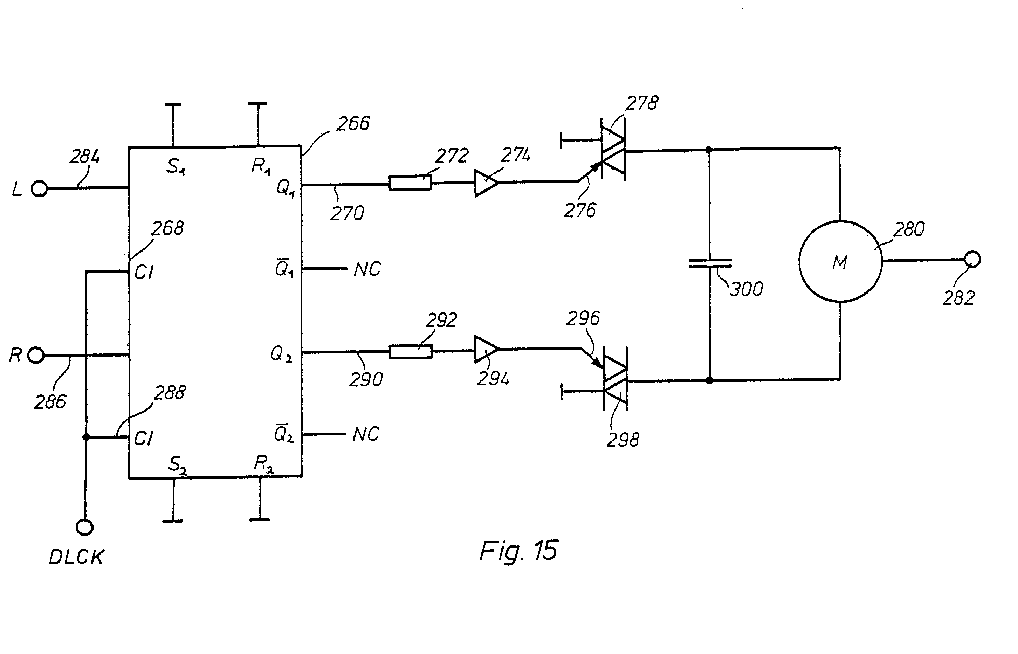

Fig. 14 veranschaulicht die Erzeugung von Taktimpulsen mit der doppelten Netzfrequenz. Diese Taktimpulse werden zur Steuerung der Synchronmotoren und der Heizungen benutzt derart, daß diese im Nulldurchgang der Netzspannung geschaltet und damit Störspitzen vermieden werden, die zu Fehlfunktionen des Mikrocomputers führen könnten.

Die Motoransteuerung ist in Fig. 15 dargestellt.

Ein von dem Mikrocomputer 264 gegebenes Einschaltsignal wird auf ein D-Flip-Flop 266 gegeben, dessen Takteingang 268 die mit der Netzfrequenz synchronisierten Taktimpulse gemäß Fig. 14 erhalten. Am Q-Ausgang 270 erscheint dann ein Einschaltsignal, dessen Vorderflanke mit einem der Taktimpulse zusammenfällt. Dieses Einschaltsignal wird über einen Widerstand 272 und eine Diode 274 auf das Gate 276 eines Triacs 278 gegeben, über den der Stromkreis des als Synchronmotor ausgebildeten Stellmotors 280 geschlossen wird, der mit einer Klemme 282 an einer 24 Volt-Wechselspannung liegt.

In Fig. 15 ist das Flip-Flop 266 ein Doppel-D-Flip-Flop mit einem Eingang 284 für Linkslauf und einen Eingang 286 für Rechtslauf, wobei letzterer mit einem Takteingang 288 zusammenwirkt, auf den ebenfalls die Taktimpulse gemäß Fig. 14 gegeben werden. Bei Anlegen eines Einschaltsignals an den Eingang 286 erscheint ein mit einem Taktimpuls synchronisiertes Ausgangssignal an einem Q-Ausgang 290, das über einen Widerstand 292 und eine Diode 294 an dem Gate 296 eines Triacs 298 anliegt. Über den Triacs 298 wird der Stromkreis des Motors 280 für Rückwärtslauf geschlossen. Mit 300 ist ein Anlaufkondensator bezeichnet.

In ähnlicher, dem Fachmann geläufiger und daher nicht dargestellter Weise erfolgt die Steuerung der verschiedenen Heizungen für die Regelung der Temperatur des Ofenblocks 46 und der Leitung 228.

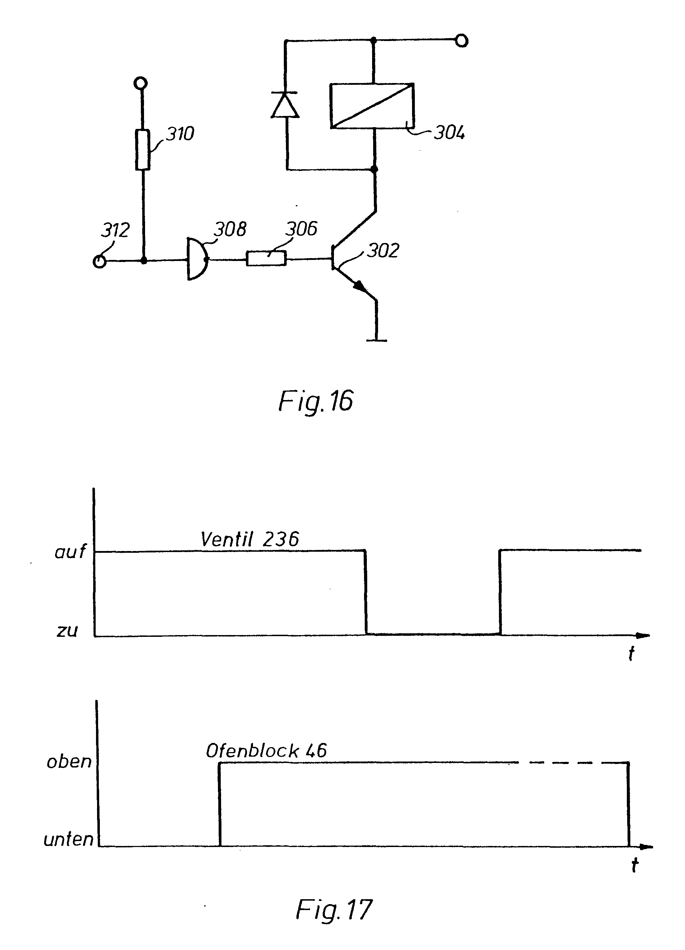

Wie aus Fig. 16 ersichtlich ist, erfolgt die Ansteuerung des Magnetventils über einen Transistor 302, dessen Emitter-Kollektor-Strecke in Reihe mit der Wicklung 304 des Magnetventils an einer Spannung von +24 Volt liegt. Die Basis des Transistors 302 liegt über einen Widerstand 306 am Ausgang eines Inverters 308, an dessen Eingang über einen Widerstand 310 eine Spannung von +15 Volt liegt. Der Transistor 302 wird durch ein L-Signal von dem Mikrocomputer, das über eine Klemme 312 auf den Eingang des Inverters 308 gegeben wird, durchgesteuert, wodurch das Magnetventil geschaltet wird.

Fig. 17 zeigt den zeitlichen Ablauf der Betätigung des Magnetventils in ihrer Beziehung zu der Hubbewegung des ersten, beheizten Probengefäßspeichers 30.

Die Arbeitsweise der beschriebenen Anordnung ist wie folgt:

Ausgehend von einem Zustand, in welchem sich der rechte Probenhalter 56 der Kolonne 60 in Anlage an dem Zahnriemen 78 befindet und der linke Probenhalter der Kolonne 68 ebenfalls an dem Zahnriemen 78 anliegt und mit diesem in Eingriff ist, wird der Zahnriemen 78 von dem Stellmotor 88 in Schritten weitergeschaltet, wobei die einzelnen Schritte durch die Signalscheibe 125 überwacht werden. Dadurch werden nacheinander die verschiedenen Durchbrüche des rechten Probenhalters 56 der Kolonne 60 in die Überführungsposition 44 gebracht, wie in Fig. 8 dargestellt ist. In jeder der in Fig. 8 dargestellten Positionen wird der Stellmotor 146 eingeschaltet und bewegt den Stößel 126 nach oben, so daß er das in dem betreffenden Durchbruch 58 sitzende Probengefäß 36 nach oben in eine Durchgangsbohrung 48 des Ofenblocks 46 einschiebt. Durch den Stellmotor 164 wird der Ofenblock 46 weitergeschaltet. Anschließend bewegt der Stellmotor 146 den Stößel 126 wieder nach unten. Dadurch kann gegebenenfalls ein anderes Probengefäß, das durch die Weiterschaltung an die Überführungsstation gelangt ist, mit dem Stößel 126 nach unten fallen und in den freigewordenen Durchbruch 58 des Probenhalters 56 gelangen. Nachdem die Probe für eine vorgegebene Zeit in dem Ofenblock 46 thermostatisiert worden ist, wird der erste, beheizte Probengefäßspeicher 30 mit dem Ofenblock 46 und dem Isoliermantel 174 durch den Stellmotor 204 angehoben, so daß die Stechkanüle 34 durch die das Probengefäß 36 abschließende, selbstdichtende Membran hindurchgestochen wird. Der über das geöffnete Magnetventil 236 wirksame Trägergasdruck wird auf das abgeschlossene Probengefäß übertragen. Das Magnetventil 236 wird anschließend für eine definierte Zeit geschlossen. Hierdurch bricht der Trägerdruck am Eingang der Trennsäule 234 zusammen, und es wird ein definierter Gasstrom aus dem Dampfraum des Probengefäßes 36 durch die Stechkanüle 34 zur Trennsäule 234 hervorgerufen. Der erste Probengefäßspeicher 30 wird dann wieder durch den Stellmotor 204 in die in Fig. 3 dargestellte Lage abgesenkt. Das Magnetventil 236 wird wieder geöffnet. Hierdurch wird die zum Eingang der Trennsäule angesaugte Probe durch die Trennsäule 234 transportiert. Gleichzeitig fließt ein gedrosselter Trägergasstrim über die Stechkanüle 34 und das Nadelventil 216 ab, wodurch die Stechkanüle 34 mit Trägergas gespült wird.

**Patentansprüche**

1. Probengeber zum Aufgeben von Proben bei der Gaschromatographie, bei welchem eine Mehrzahl von Proben nach der Dampfraummethode nacheinander auf den Einlaßteil eines Gaschromatographen geleitet werden, enthaltend:

(a) einen ersten, beheizbaren, schrittweise fortschaltbaren Probengefäßspeicher (30) mit einer Mehrzahl von Probenplätzen,

(b) Mittel (32) zum Einstechen einer mit dem Einlaßteil des Gaschromatographen verbundenen Stechkanüle (34) durch die Probengefäße (36) abschließende Verschlußglieder hindurch in die oberhalb der Proben in den Probengefäßen (36) gebildeten Dampfräume an einer Probenstation (38) und

(c) Mittel zum Überführen eines Volumens von Probe aus dem Dampfraum über die Stechkanüle (34) in den Einlaßteil

gekennzeichnet durch

(d) einen zweiten, schrittweise fortschaltbaren Probengefäßspeicher (40),

(e) Mittel (42) zum Überführen jeweils eines Probengefäßes (36) aus dem zweiten Probengefäßspeicher (40) an einen Probenplatz des ersten Probengefäßspeichers (30) an einer Überführungsstation (44) und

(f) Mittel (264) zum synchronisierten Steuern des ersten Probengefäßspeichers, der Einsteck- und Probenüberführungsmittel, des

zweiten Probengefäßspeichers und der Probengefäßüberführungsmittel.

2. Probengeber nach Anspruch 1, dadurch gekennzeichnet, daß der erste, beheizbare Probenspeicher (30)

(a) einen drehbar gelagerten, beheizbaren Ofenblock (46) enthält, der um die Achse herum einen Kranz von axialen Durchgangsbohrungen (48) aufweist, und

(b) eine feststehende Grundplatte (50), die an der Überführungsstation (44) einen mit je-weils einer Durchgangsbohrung fluchten-den Durchbruch aufweist.

3. Probengeber nach Anspruch 2, dadurch ge-kennzeichnet, daß die Probengefäßüberfüh-rungsmittel (42) ein Hubglied (52) enthalten, durch welches jeweils ein Probengefäß (36) durch den Durchbruch hindurch in die damit fluchtende Durchgangsbohrung (48) einschiebbar ist.

4. Probengeber nach einem der Ansprüche 1 bis 3, dadurch gekennzeichnet, daß

(a) die Stechkanüle (34) gerätefest an der Probenstation (38) gehalten ist und

(b) die Einstechmittel (32) einen Hubmechanismus (54) enthalten, durch den der erste Pro-bengefäßspeicher (30) gegen die Stechka-nüle (34) anhebbar ist.

5. Probengeber nach einem der Ansprüche 1 bis 4, dadurch gekennzeichnet, daß der zweite Probengefäßspeicher (40)

(a) eine Mehrzahl von langgestreckten Probenhaltern (56) von blockförmiger Grundform aufweist, die jeder mit einer Reihe von Durchbrüchen (58) zur Aufnahme von Probengefäßen (36) versehen ist und die mit ihren Längsseiten aneinander angrenzend in einer Kolonne (60) auf einem Tisch (62) angeordnet ist,

(b) erste Fördermittel (64) auf der der Überführungsstation (44) benachbarten Seite der Kolonne (60), durch welche der jeweils an der Stirnseite der Kolonne (60) befindliche Probenhalter (56) schrittweise quer zu der Kolonne (60) so fortschaltbar ist, daß die in dem Probenhalter (56) gehalterten Probengefäße (36) nacheinander an die Überführungsstation (44) gelangen und der Probenhalter (56) schließlich seitlich aus der Kolonne (60) herausgeschoben wird, und

(c) zweite Fördermittel (66), durch welche nach jedem seitlichen Herausschieben des stirnseitigen Probenhalters (56) die Probenhalter (56) in Längsrichtung der Kolonne (60) um eine Probenhalterbreite fortschaltbar sind, so daß der nächste Probenhalter (56) in den Bereich der ersten Fördermittel (64) gelangt.

6. Probengeber nach Anspruch 5, dadurch gekennzeichnet, daß der zweite Probengefäßspeicher (40) weiterhin

(d) eine zweite Kolonne (68) von Probenhaltern (56) parallel zu der ersten Kolonne (60) auf dem Tisch (62) aufweist sowie

(e) dritte Fördermittel (70), durch welche der Probenhalter (56) auf der der Überführungsstation (44) abgewandten Stirnseite der zweiten Kolonne (68) quer zur Längsrichtung der zweiten Kolonne (68) vor die benachbarte Stirnseite der ersten Kolonne (60) verschiebbar ist, nachdem die Probenhalter (56) der ersten Kolonne (60) durch die zweite Fördermittel (66) um eine Probenhalterbreite fortgeschaltet worden sind, und

(f) vierte Fördermittel (71), durch welche nach jedem seitlich Herausschieben des stirnseitigen Probenhalters (56) aus der zweiten Kolonne (68) in die erste Kolonne (60), die Probenhalter (56) der zweiten Kolonne (68) gegensinnig zur Förderrichtung der zweiten Fördermittel (66) in Längsrichtung der zweiten Kolonne (68) um eine Probenhalterbreite fortschaltbar sind, so daß der nächste Probenhalter (56) in den Bereich der dritten Fördermittel (70) gerät.

7. Probengeber nach einem der Ansprüche 1 bis 6, dadurch gekennzeichnet, daß die Probengefäßüberführungsmittel (42) nach Überführen eines Probengefäßes (36) aus dem Probenhalter (56) in den ersten Probengefäßspeicher (30) und Fortschalten des ersten Probengefäßspeichers (30) ein Probengefäß (36'), das in dem ersten Probengefäßspeicher (30) an dem Probenplatz sitzt, der durch das Fortschalten an die Überführungsstation (44) gelangt, aus dem ersten Probengefäßspeicher (30) zu den freigewordenen Probenplatz des zweiten Probengefäßspeichers (40) überführen.

**Claims**

1. Sampling device for feeding samples in the gas chromatography, with which a plurality of samples are transmitted consecutively to the inlet portion of a gas chromatograph in accordance with the head space method, comprising:

(a) a first heatable sample vessel storage (30) arranged to be stepwise advanced and having a plurality of sample spaces,

(b) means (32) for sticking a needle (34) communicating with the inlet portion of the gas chromatograph through the sealing members closing the sample vessels (36) into the head spaces formed above the samples in the samples vessels (36) at a sample station (38), and

(c) means for transmitting a sample volume from the head space trough the needle (34) into the inlet portion, characterized by

(d) a second sample vessel storage (40) arranged to be stepwise advanced,

(e) means (42) for transmitting a sample vessel (36) from the second sample vessel storage (40) to a sample space of the first sample vessel storage (30) at a transferring station (44),

(f) means (264) for controlling in a synchronized manner the first sample vessel storage, the sticking and sample transferring means, the second sample vessel storage and the sample vessel transferring means.

2. Sampling device as set forth in claim 1, characterized in that the first heatable sample storage (30) comprises

(a) a heatable oven block (46) ratatably mounted, which has about the axis a circular array of axial through bores (48), and

(b) a stationary base plate (50) which has, at the transferring station, an aperture in aligement with respectively one through bore.

3. Sampling device as set forth in claim 2, characterized in that the sample vessel transferring means (42) comprise a displacement member (52), by which one sample vessel (36) at a time may be pushed through the aperture into the troughbore (48) aligned thereto.

4. Sampling device as set forth in anyone of the claims 1 to 3, characterized in that

(a) the needle (34) is held stationary to the apparatus at the sample station (38) and

(b) the sticking means (32) comprise a displacement mechanism (54), which is arranged to lift the first sample vessel storage (30) towards the needle (34).

5. Sampling device as set forth in anyone of the claims 1 to 4, characterized in that the second sample vessel storage (40) has

(a) a plurality of oblong sample supports (56) of generally block-shaped form, each of which is provided with a series of apertures (58) for receiving sample vessels (36) and which sample supports are arranged in a column (60) on a table (62), their longitudinal sides being adjacent,

(b) first conveying means (64) on the side of the column (60) adjacent the transferring station (44), which conveying means are adapted to steppwise advance the sample support (56) at the front side of the column (60) transversely to the column (60), such that the sample vessels (36) held in the sample support (56) consecutively get to the transferring station (44) and the sample support (56) is finally laterally pushed out of the column (60), and

(c) second conveying means (66) which, after the sample support at the front side (56) has been pushed out, are adapted to advance about the breadth of a sample support, the sample supports (56) in longitudinal direction of the column (60) such that the next sample support (56) gets to in the area of the first conveying means (64).

6. Sampling device as set forth in claim 5, characterized in that the second sample vessel storage (40) has furthermore

(d) a second column (68) of sample supports (56) parallel to the first column (60) on the table (62), and

(e) third conveying means (70), which are adapted to displace transversely to the longitudinal direction of the second column (68) the sample support (56) on the front side of the second column (68) remote from the transferring station (44) in front of the adjacent front side of the first column (60), after the sample supports (56) of the first column (60) have been advanced by the breath of a sample support by the second conveying means (66), and

(f) fourth conveying means (71) by which, after the sample support (56) at the front side has been laterally pushed out of the second column into the first column (60), are adapted to advance the sample supports (56) of the second column (68) by the breadth of a sample support in an opposite direction of the conveying direction of the second conveying means (66) in the longitudinal direction of the second column (68), such that the next following sample support (56) gets to the area of the third conveying means (70).

7. Sampling device as set forth in anyone of the claims 1 to 6, characterized in that the sample vessel transferring means (42) after the transferring of a sample vessel (36) out of the sample support (56) into the first sample vessel storage (30) and advancing of the first sample vessel storage (30), transfer a sample vessel (36') located in the first sample vessel storage (30) at the sample space, which by the advancing get to the transferring station (44), out of the first sample vessel storage (30) to the cleared sample space of the second sample vessel storage (40).

**Revendications**

1. Dispositif d'alimentation d'échantillon pour l'alimentation d'échantillon dans la chromatographie de gaz, dans lequel une pluralité d'échantillons est conduite, selon la méthode d'espace à vapeur, l'un après l'autre sur l'élément d'entrée d'un chromatographe pour phase gazeuse, contenant:

(a) un premier dépôt de récipients d'échantillon chauffable (39) avancé pas à pas et ayant une pluralité d'emplacements d'échantillon,

(b) des moyens (32) pour enfoncer une canule (34) reliée à l'élément d'entrée du chromatographe à phaze gazeuse, à travers les éléments de fermeture fermant les récipients d'échantillon, dans les espaces à vapeur formés au-dessus des échantillons dans les récipients d'échantillon (36), à une station d'échantillon (38) et

(c) des moyens pour transmettre un volume d'échantillon depuis l'espace à vapeur, à travers la canule (34) dans l'élément d'entrée, caractérisé par

(d) un deuxième dépôt de récipients d'échantillon (40) avancé pas à pas,

(e) des moyens (42) pour transmettre chaque fois un récipient d'échantillon (36) depuis le deuxième dépôt de récipients d'échantillon (40) à un emplacement d'échantillon du premier dépôt de récipients d'échantillon (30), à une station de transmission (44) et

(f) des moyens (264) pour la commande synchronisée du premier dépôt de récipients d'échantillon, des moyens d'enfoncement et de transmission, du deuxième dépôt de récipients d'échantillon et des moyens de transmission du récipient d'échantillon.

2. Dispositif d'alimentation d'échantillon selon la revendication 1, caractérisé par le fait que le premier dépôt d'échantillon (30) chauffable contient

(a) un bloc de four chauffable (46) monté de manière rotative, qui présente autour de l'axe une couronne d'alésages de passage axiaux (48) et

(b) une plaque de base fixe (50) qui possède, à la station de transmission (44), une rupture alignée sur un alesage de passage à la fois.

3. Dispositif d'alimentation d'échantillon selon la revendication 2, caractérisé par le fait que les moyens de transmission des récipients d'échantillon (42) contiennent un élément de levée (52) qui peut pousser un récipient d'échantillon (36) à la fois, à travers la rupture, dans l'alésage de passage (48) aligné sur celle-ci.

4. Dispositif d'alimentation d'échantillon selon l'une quelconque des revendications 1 à 3, caractérisé par le fait que

(a) la canule (34) est tenue de manière fixe par rapport à l'appareil, à la station d'échantillon (38) et

(b) les moyens d'enfoncement (32) contiennent un mécanisme de levée (54) par lequel le premier dépôt de récipients d'échantillon (30) peut être levé par rapport à la canule (34).

5. Dispositif d'alimentation d'échantillon selon l'une quelconque des revendications 1 à 4, caractérisé par le fait que le deuxième dépôt de récipients d'échantillon (40) présente

(a) une pluralité de supports d'échantillon allongés (56) en forme de base de bloc, qui chacun est prévu d'une série de ruptures (58) pour l'accueil de récipients d'échantillon (36), et qui sont disposés dans une colonne (60) sur une table (62), leurs côtés longitudinaux étant adjacents,

(b) des premiers moyens de transport (64) sur le côté adjacent à la station de transmission (44) de la colonne (60), par quels moyens le support d'échantillon (56) situé à chaque fois sur la face de la colonne (60) peut être avancé pas à pas de manière transversale relatif à la colonne (60), de sorte que les récipients d'échantillon (36) tenus dans le support d'échantillon (56) arrivent l'un après l'autre à la station de transmission (44) et que le support d'échantillon (56) est finalement poussé latéralement hors de la colonne (60), et

(c) des deuxième moyens de transport (66) par lesquels, chaque fois que le support d'échantillon (56) de la face est poussé hors de la colonne, les supports d'échantillon (56) peuvent être avancés d'une largeur du support d'échantillon dans la direction lonitudinale de la colonne (60) de sorte que le support d'échantillon suivant (56) arrive dans le domaine des premiers moyens de transport (64).

6. Dispositif d'alimentation d'échantillon selon la revendication 5, caractérisé par le fait que le deuxième dépôt de récipients d'échantillon (40) présente, en outre,

(d) une deuxième colonne (68) de supports d'échantillon (56) parallèle à la première colonne (60), sur la table (62) ainsi que

(e) des troisième moyens de transport (70) par lequel le support d'échantillon (56) sur la face de la deuxième colonne (68), opposé à la station de transmission (44) peut être déplacé de manière transversale relatif à la direction longitudinale de la deuxième colonne (68) devant la face adjacente à la première colonne (60), après que les supports d'échantillon (56) de la première colonne (60) sont avancés d'une largeur de support d'échantillon, par les deuxième moyens de transport, et

(f) des quatrième moyens de transport (71) par lesquels, chaque fois que le support d'échantillon (56) de la face est poussé hors de la deuxième colonne (68) dans la première colonne (60), les supports d'échantillon (56) de la deuxième colonne (68) peuvent être avancés d'une largeur de support d'échantillon en sens inverse de la direction de transport des deuxième moyens de transport (66) en direction longitudinale de la deuxième colonne (68), de sorte que le support d'échantillon suivant (56) arrive dans le domaine des troisième moyens de transport (70).

7. Dispositif d'alimentation d'échantillon selon l'une quelconque des revendications 1 à 6, caractérisé par le fait que les moyens de transmission des récipients d'échantillon (42), après avoir transmis un récipient d'échantillon (36) depuis le support d'échantillon (56) dans le premier dépôt de récipients d'échautillon (30) et après l'avancement du premier dépôt de récipients d'échantillon (30), transmettent un récipient d'échantillon (36') situé dans le premier dépôt de récipients d'échantillon (30) dans l'emplacement d'échantillon qui, par l'avancement, arrive à la station de transmission (44), depuis le premier dépôt de récipients d'échantillon à l'emplacement d'échantillon devenu libre du deuxième dépôt de récipients d'échantillon (40).

Fig. 1

0 071 092

Fig. 2

0 071 092

Fig. 3

Fig. 4

Fig. 5

Fig. 6

260⌐    ⌐262

*Fig. 7*

74

90    56  58

Pos.0    Pos.1    Pos.2    Pos.3    Pos.4    Pos.0

*Fig. 8*

Fig. 9

Fig. 10

207

205

*Fig. 11*

256

Pos. 0

1

4

2

3

124

*Fig. 12*

Fig. 13

Fig. 14

Fig. 15

Fig. 16

Fig. 17

Fig.18

0 071 092